# EUROPÄISCHE PATENTSCHRIFT

(11) **EP 0 532 999 B1**
(45) Veröffentlichungstag und Bekanntmachung des Hinweises auf die Patenterteilung: **12.06.1996**
(21) Anmeldenummer: 92115200.5
(22) Anmeldetag: 04.09.1992
(51) Int. Cl.: H01B 13/32, G02B 6/44

(54) **Vorrichtung zum Füllen der Zwischenräume eines Kabels**
Apparatus for filling the interstices of a cable
Dispositif pour remplir les interstices d'un câble

(30) Priorität: 18.09.1991 DE 4131064
(43) Veröffentlichungstag der Anmeldung: 24.03.1993
(73) Patentinhaber: SIEMENS AKTIENGESELLSCHAFT, D-80333 München (DE)
(72) Erfinder: Niesemeyer, Norbert, Dr. Ing., Hickory NC 28601 (US); Reissenweber, Wilfried, W-8633 Rödental (DE); Knoch, Horst, Dipl.-Ing. (FH), W-8630 Coburg (DE)

(56) Entgegenhaltungen:
- EP-A- 0 087 757
- DE-A- 3 144 693
- FR-A- 2 317 745
- FR-A- 2 372 497
- GB-A- 2 085 324

## Beschreibung

Vorrichtung zum Füllen der Zwischenräume zwischen den Adern und einer Hülle eines Kabels

Die Erfindung betrifft eine Vorrichtung zum Füllen der Zwischenräume zwischen den Adern und einer Hülle eines optischen und/oder elektrischen Kabels mit einer Füllmasse mittels eines Füllkopfes, der eine Vorfüllkammer und eine Hauptfüllkammer aufweist, wobei sich an die Vorfüllkammer eine im Querschnitt gegenüber der Vorfüllkammer verringerte Beschichtungsdüse anschließt, welche in die Hauptfüllkammer mündet.

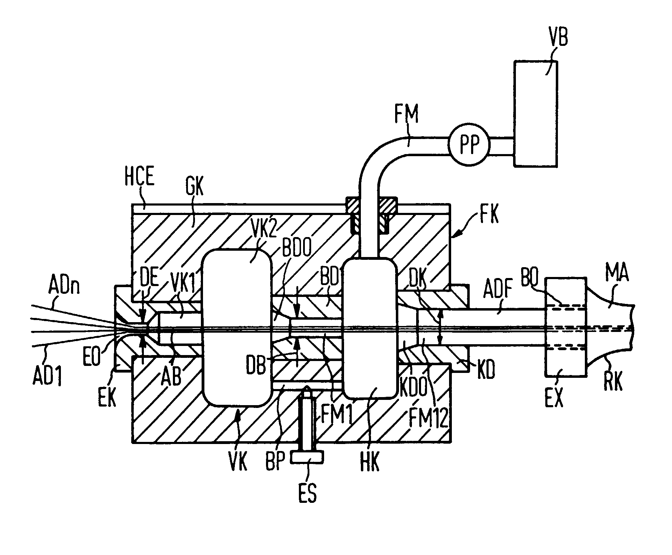

Eine Vorrichtung dieser Art ist aus der FR-A 2317745 bekannt, wobei die Adern über getrennte Einlaufkanäle einer ersten Kammer zugeführt werden, der eine demgegenüber im Querschnitt verringerte Beschichtungsdüse nachfolgt. Daran schließt sich eine im Querschnitt wiederum vergrößerte zweiten Kammer an, auf die eine Ausgangsdüse folgt. Die Zuführung des Füllmaterials erfolgt bei Figur 1 nur in die erste Kammer, wobei das Füllmaterial in Durchlaufrichtung von der ersten Kammer durch die zwischengefügte Beschichtungsdüse in die nachfolgende zweite Kammer eingepreßt wird. Bei einer derartigen Anordnung sind die Strömung der Füllmasse einerseits und die Fortbewegung der einzelnen Adern andererseits nicht voneinander zu trennen, weil beide die Beschichtungsdüse nur gemeinsam durchlaufen können. Darüber hinaus hängt die Zuführung der Füllmasse in die zweite Kammer auch davon ab, wieviele Adern zugeführt werden und wie groß der Querschnitt der Beschichtungsdüse gewählt wird. Bei einer weiteren Ausführungsform entsprechend Figur 2 wird das Beschichtungsmaterial in die erste Kammer eingeführt und zusätzlich getrennt über eine zweite Zuführungseinrichtung in die der Beschichtungsdüse folgende zweite Kammer. Damit sind die bei einer nur einseitigen Zuführung des Füllmaterials auftretenden Schwierigkeiten beseitigt.

Aus der DE-A1- 31 44 936 ist eine Füllvorrichtung bekannt, bei der eine Kabelseele über einen Eintrittsstutzen mit gegenüber der Kabelseele großem Durchmesser einem ersten Füllkopf zugeführt wird, dem ein zweiter Füllkopf nachgeschaltet ist. Der Austrittsstutzen des ersten und der Eintrittsstutzen des zweiten Füllkopfes sind druckdicht miteinander verbunden.

Der Erfindung liegt die Aufgabe zugrunde eine Vorrichtung der eingangs genannten Art so weiterzubilden, daß eine zuverlässige und auch bei hohen Durchlaufgeschwindigkeiten sicher arbeitende Beschichtung des Aderbündels gewährleistet wird. Diese Aufgabe wird bei einer Vorrichtung der eingangs genannten Art dadurch gelöst, daß ein gemeinsamer Einlaufkanal für mehrere lose gebündelte Adern vorgesehen ist, der in die Vorfüllkammer führt und dessen Durchtrittsöffnung im Durchmesser nur geringfügig größer gewählt ist, als die Umhüllende der zu einem Bündel zusammengefaßten Adern, daß die Vorfüllkammer und die Hauptfüllkammer über einen Beipaß miteinander verbunden sind, und daß die Hauptfüllkammer mit einem Vorratsbehälter für die Füllmasse verbunden ist. Durch den Einsatz eines Beipasses ist eine sichere und zuverlässige Füllung auch der Vorkammer gewährleistet. Da der gemeinsame Einlaufkanal in seiner Einlaßöffnung im Durchmesser nur geringfügig größer gewählt ist als die Umhüllende der zu einem Bündel zusammengefaßten Adern ist ein Austreten von Füllmasse an dieser Stelle praktisch ausgeschlossen. Trotzdem kann mit relativ hohen Drücken bereits im Bereich der Vorfüllkammer gearbeitet werden, was erheblich mit dazu beiträgt, daß alle Zwickelräume vollständig und sicher mit Füllmasse verschlossen werden. Als Füllmassen kommen insbesondere in Frage wasserabweisende Massen, die gegebenenfalls mit einem Thixotropierungsmittel versetzt sein können. Die Adern können miteinander verseilt sein oder auch geradlinig einlaufen. Die im Querschnitt verringerte Beschichtungsdüse trennt einerseits die Vorfüllkammer und andererseits die Hauptfüllkammer im gewissen Umfang voneinander, und bewirkt eine Art Abstreifen oder Vergleichmäßigen der in der Vorfüllkammer aufgebrachten Füllmasse. In der anschließenden Hauptfüllkammer wird die Füllmasse in einer größeren Stärke aufgebracht, so daß ein allseits dicht mit Füllmasse ausreichend umgebenes Bündel am Ausgang des Füllkopfes vorliegt.

Unter dem Begriff "Ader" sind im Rahmen dieser Anmeldung neben blanken oder isolierten elektrischen Leitern auch mit einer Schutzschicht (coating) versehene oder von einer Schutzhülle ("Hohlader") umgebene Lichtwellenleiter zu verstehen.

Weiterbildungen der Erfindung sind in Unteransprüchen wiedergegeben.

Die Erfindung und ihre Weiterbildungen werden nachfolgend anhand einer Zeichnung näher erläutert, in der ein Füllkopf FK im Querschnitt dargestellt ist. Dieser Füllkopf FK weist einen, gegebenenfalls mehrteilig ausgebildeten Grundkörper GK auf, dem die von einem Vorratsbehälter VB kommende Füllmasse FM über eine Pumpe BP zugeführt wird. Diese Füllmasse FM gelangt zunächst in eine Hauptfüllkammer HK, und über einen Beipaß BP zu einer Vorfüllkammer VK. Die zu beschichtenden Adern ADl-ADn (z.B. isolierte elektrische Adern oder Lichtwellenleiter-Adern) werden zu einem Bündel AB zusammengefaßt. Dieses Bündel AB kann gegebenenfalls auch verseilt sein. In dieser Form laufen die Adern ADl-ADn in einen Einlaufkanal EK ein, der eine etwa konusförmige Einlaßöffnung EO aufweist und im Innenbereich mit einem gleichbleibenden endgültigen Durchmesser DE versehen ist, der nur geringfügig größer gewählt ist als der Außendurchmesser bzw. die Umhüllende des Bündels AB. Es ist zweckmäßig, den Durchmesser DE um etwa 0,5 bis 1 mm größer zu wählen als die Umhüllende des dicht gepackten Bündels AB.

Die Fasern werden im Einlaufbereich des Einlaufkanals EK lose gebündelt, d.h. dessen Durchmesser DE wird so gewählt, daß eine Packungsdichte des Aderbündels erreicht wird, die schon an dieser Stelle Füllmasse in die Zwickel dringen läßt, aber dennoch eine gute zentrische Lage der Adern AD1-ADn im Massestrang beim weiteren Prozessverlauf gewährleistet.

Das Aderbündel AB läuft in eine gestreckte Vorfüllkammer VK ein, deren Gesamtlänge etwa zwischen 20 und 50 mm gewählt ist. Die Vorfüllkammer VK weist zunächst einen ersten Teilbereich VK1 auf, in dessen Durchmesser zweckmäßig etwa das 1,5 bis 3-fache von DE beträgt. Die Länge dieses Teilbereichs wird zweckmäßig zwischen 5 und 20 mm gewählt. Dieser Teilbereich VK1 der Vorfüllkammer hat die Aufgabe ein Einschleppen von Luft durch Ader/Fasern in die Füllmasse zu verhindern, was in Abstimmung über die Größe der Kammer und die Masseverteilung in die Vorkammer VK erfolgt.

An die Teilkammer bzw. den Teilbereich VK1 schließt sich eine stark verbreitete Teilkammer VK2 an, deren Durchmesser zweckmäßig das 3 bis 8-fache des Durchmessers DE aufweist. Diese Teilkammer VK2 hat vorteilhaft eine Länge von 10 bis 30 mm und mündet in eine Beschichtungsdüse BD, die einen konischen Einlauftrichter BDO aufweist. Die Beschichtungsdüse BD hat zweckmäßig eine Länge zwischen 30 und 40 mm, wobei ihr Durchmesser DB vorteilhaft zwischen dem 1,5 und 4-fachen von DE gewählt wird. In dieser Beschichtungsdüse BD erfolgt eine Art harten Abstreifens der von der Vorfüllkammer VK aufgebrachten ersten Teilfüllmasse FM1, wobei diese Füllmasse FM1 sicher und zuverlässig auch bei hohen Durchlaufgeschwindigkeiten und enger Bündelung der Adern AD1-ADn auch in die innersten Zwickel gelangt. Das mit der Füllmasse FM1 versehene Aderbündel AB gelangt in eine Hauptfüllkammer HK, deren Länge vorteilhaft zwischen 5 und 25 mm gewählt wird. Die Hauptfüllkammer HK weist einen Durchmesserbereich zweckmäßig etwa des 3- bis 9-fachen von DE auf. Hier wird ein weiterer Füllmassenanteil auf die mit bereits dem Füllmassenanteil FM1 dünn beschichtete Aderbündel ADB aufgebracht, so daß daraus resultierend eine Füllmassen-Beschichtung FM12 resultiert und somit eine gleichmäßig symmetrische und blassenfreie Masseschicht über das durchlaufende Ader/Faserbündel entsteht.

Das Volumen der gesamten Vorfüllkammer VK ist vorteilhaft größer gewählt als das der Hauptfüllkammer HK und zwar zweckmäßig um das etwa 1,5 bis 3-fache. Wenn die Pumpe BP als Präzisions-Dosierpumpe ausgebildet ist und mit der Extruderlinie des Extruders EX synchronisiert betrieben wird, dann ist stets die notwendige Menge an Füllmasse FM vorhanden.

Am Ausgang der Hauptfüllkammer HK ist eine mit einen konischen Einlauftrichter KDD versehende Kalibrierdüse KD vorgesehen, deren Innendurchmesser DK zweckmäßig etwa dem 0,9 bis 1,1-fachen des Innendurchmessers am fertigen Vorprodukt entspricht. Gegenüber dem Außendurchmesser der Hauptfüllkammer HK führt somit auch die Kalibrierdüse KD eine Art hartes Abstreifen der Füllmasse FM12 durch, so daß das so vollständig beschichtete Aderbündel ADF z.B. in die Durchgangsbohrung BO eines Extruderkopfes EX einlaufen kann, wo als Hülle ein Schutzmantel MA auf das Aderbündel ADF in Form eines Reckkegels aufextrudiert wird. Bei der Hülle bzw. dem Mantel MA kann es sich um einen Kabelmantel oder um eine Schutzhülle für ein Aderbündel handeln (dies gilt insbesondere bei Lichtwellenleitern) der anschließend z.B. über einen Verseilvorgang mit anderen gleichartigen Bündeln zu einer Kabelseele verseilt wird. Ein fertiges Kabel wird dagegen direkt auf eine Trommel aufgewickelt.

Die Vorfüllkammer VK und die Hauptfüllkammer HK sind über einen Beipaß BP miteinander verbunden, wobei die Zuführung der Füllmasse FM direkt zunächst in die Hauptkammer HK erfolgt. Die Menge an Füllmasse, welche in die Vorfüllkammer VK gelangt und auch deren Druck sind über entsprechende Einstellmittel, z.B. eine Einstellschraube ES oder Feinregulierventil gegebenenfalls mechanisch, elektrisch oder pneumatisch einstellbar bzw. veränderbar. Auf diese Weise läßt sich der Volumenstrom zwischen den beiden Kammern den Eigenschaften der jeweiligen Füllmasse, z.B. der Füllmassenthixotropie entsprechend und dem Benetzungsverhalten der Adern/Fasern anpassen. Bei Verwendung von Lichtwellenleitern können auf diese Weise bereits im Bereich des Füllkopfes FK die notwendigen Faser-Überlängen eingestellt werden.

Die Einspeisung in die und der höhere Druck in der Hauptkammer HK sind vorteilhaft, um eine blasenfreie Beschichtung zu ermöglichen. Damit werden Störungen von der Füllmasse aus der Hauptkammer HK in die Vorkammer VK verhindert.

Der Druck in der Hauptkammer HK liegt zwischen 0,6 und 20 bar - je nach Abzugsgeschwindigkeit und Viskosität der Füllmasse. Niedrige Werte ergeben sich vorzugsweise bei Füllmassen niedriger Viskosität und kleinen Abzugsgeschwindigkeiten. Der Druck in der Vorkammer VK liegt vorteilhaft beim 0,5 bis 0,9-fachen des Druckes der Hauptkammer HK.

Die Geometrie der Einlauföffnung EO des Einlaufkanals EK sowie die verwendeten Werkstoffe und die Restrauhigkeit der Führungsflächen sind von Bedeutung für die Höhe der auf das Aderbündel AB ausgeübten Reibkräfte. Für den Einlaufkanal EK sind harte Werkstoffe, insbesondere Keramik, Hartmetall oder Diamant mit besonderem Vorteil verwendbar, weil diese einem geringen Verschleiß unterliegen sowie günstige Reibungswerte liefern.

Der Einlaufkanal EK, die Beschichtungsdüse BD und die Kalibrierdüse KD sind zweckmäßig auswechselbar ausgebildet, wodurch in einfacher Weise eine Anpassung an unterschiedliche Ader-Bündeldurchmesser möglich ist.

Es kann zweckmäßig sein, für den Füllkopf FK eine Beheizung oder Kühlung mittels einer Heiz- oder Kühleinrichtung HCE vorzusehen. Eine Beheizung ist zweckmäßig, um die Füllmasse FM dünnflüssiger (d.h. niederviskoser) zu machen. Eine Kühlung ist insbesonders dann angebracht, wenn vernetzende Füllmassen (z.B. aus mindestens zwei Komponenten bestehende Massen) eingesetzt werden, die möglichst innerhalb des Füllkopfes FK die Vernetzungstemperatur nicht erreichen sollen.

## Patentansprüche

1. Vorrichtung zum Füllen der Zwischenräume zwischen den Adern und einer Hülle eines optischen und/oder elektrischen Kabels mit einer Füllmasse (FM) mittels eines Füllkopfes (FK), der eine Vorfüllkammer (VK) und eine Hauptfüllkammer (HK) aufweist, wobei sich an die Vorfüllkammer (VK) eine im Querschnitt gegenüber der Vorfüllkammer (VK) verringerte Beschichtungsdüse (BD) anschließt, welche in die Hauptfüllkammer (HK) mündet,
**dadurch gekennzeichnet,**
daß ein gemeinsamer Einlaufkanal (EK) für mehrere lose gebündelte Adern (AD1 - ADn) vorgesehen ist, der in die Vorfüllkammer (VK) führt und dessen Durchtrittsöffnung im Durchmesser (DE) nur geringfügig größer gewählt ist, als die Umhüllende der zu einem Bündel (AB) zusammengefaßten Adern (AD - ADn),
daß die Vorfüllkammer (VK) und die Hauptfüllkammer (HK) über einen Beipaß (BP) miteinander verbunden sind,
und daß die Hauptfüllkammer (HK) mit einem Vorratsbehälter (VB) für die Füllmasse (FM) verbunden ist.

2. Vorrichtung nach Anspruch 1,
**dadurch gekennzeichnet**,
daß die Einlaßöffnung der Vorfülikammer im Durchmesser um 0,5 bis 1 mm größer gewählt ist, als die Umhüllende der zu einem Bündel (AB) zusammengefaßten Adern (ADl-ADn).

3. Vorrichtung nach einem der vorhergehenden Ansprüche,
**dadurch gekennzeichnet,**
daß die Beschichtungsdüse (BD) auswechselbar ausgebildet ist.

4. Vorrichtung nach einem der vorhergehenden Ansprüche,
**dadurch gekennzeichnet,**
daß der Einlaufkanal (EK) auswechselbar ausgebildet ist.

5. Vorrichtung nach einem der vorhergehenden Ansprüche,
**dadurch gekennzeichnet**,
daß nach der Hauptfüllkammer (HK) eine, vorzugsweise auswechselbare, Kalibrierdüse (KD) vorgesehen ist.

6. Vorrichtung nach einem der vorhergehenden Ansprüche,
**dadurch gekennzeichnet,**
daß die Vorfüllkammer (VK) und die Hauptfüllkammer über einen einstellbaren oder für bestimmte Betriebspunkte fest optimierten Beipaß (BP) verbunden sind.

7. Vorrichtung nach einem der vorhergehenden Ansprüche,
**dadurch gekennzeichnet**,
daß der Füllkopf (FK) mit einer Heiz- oder Kühlvorrichtung (HCE) versehen ist.

8. Vorrichtung nach Anspruch 7,
**dadurch gekennzeichnet**,
daß für die Erniedrigung der Viskosität der Füllmasse (FM) eine Beheizung des Füllkopfes (FK) vorgesehen ist.

9. Vorrichtung nach Anspruch 7,
**dadurch gekennzeichnet**,
daß für die Verarbeitung vernetzender Füllmassen (FM) eine Kühlung des Füllkopfes (FK) derart vorgesehen ist, daß die Temperatur der Füllmasse (FM) unterhalb der Vernetzungstemperatur gehalten ist.

10. Vorrichtung nach einem der vorhergehenden Ansprüche,
**dadurch gekennzeichnet,**
daß die Vorfüllkammer (VK) zweiteilig ausgebildet ist, wobei die eingangsseitige Teilkammer (VK1) einen geringeren Durchmesser aufweist als die nachfolgende Teilkammer (VK2).

11. Vorrichtung nach Anspruch 10,
**dadurch gekennzeichnet,**
daß der Durchmesser der nachfolgenden Teilkammer (VK2) das 3- bis 8-fache des Durchmessers (DE) der Durchtrittsöffnung des Einlaufkanals (EK) beträgt.

12. Vorrichtung nach einem der Ansprüche 10 oder 11,
**dadurch gekennzeichnet**,
daß der Durchmesser der eingangsseitigen Teilkammer (VK1) das 1,5- bis 3-fache des Durchmessers (DE) der Durchtrittsöffnung (VK1) des Einlaufkanals (EK) beträgt.

13. Vorrichtung nach einem der vorhergehenden Ansprüche,
**dadurch gekennzeichnet**,
daß der Durchmesser (DB) der Beschichtungsdüse (BD) zwischen dem 1,5- und 4-fachen des Durchmessers (DE) der Durchtrittsöffnung des Eingangskanals (EK) beträgt.

14. Vorrichtung nach einem der vorhergehenden Ansprüche,
**dadurch gekennzeichnet,**
daß der Durchmesser der Hauptfüllkammer (HK) das 3- bis 9-fache des Durchmessers (DE) der Durchtrittsöffnung des Einlaufkanals (EK) beträgt.

15. Vorrichtung nach einem der vorhergehenden Ansprüche,
**dadurch gekennzeichnet**,
daß das Volumen der Vorfüllkammer (VK) größer gewählt ist als das Volumen der Hauptfüllkammer (HK).

16. Vorrichtung nach einem der vorhergehenden Ansprüche,
**dadurch gekennzeichnet**,
daß für die Füllmasse (FM) in der Hauptkammer (HK) ein höherer Druck vorgesehen ist.

## Claims

1. Device for filling the interstices between the conductors and a sheath of an optical and/or electric cable with a filling compound (FM) by means of a filling head (FK) which has a prefilling chamber (VK) and a main filling chamber (HK), a coating nozzle (BD) which opens into the main filling chamber (HK) and has a reduced cross-section by comparison with the prefilling chamber (VK) adjoining the prefilling chamber (VK), characterized in that a common inlet channel (EK) is provided for a plurality of loose, bundled conductors (AD1 - ADn) which leads into the prefilling chamber (VK) and the diameter (DE) of the through-opening of which is selected to be only slightly larger than the envelope of the conductors (AD - ADn) combined to form a bundle (AB), in that the prefilling chamber (VK) and the main filling chamber (HK) are connected to one another via a bypass (BP), and in that the main filling chamber (HK) is connected to a dispensing vessel (VB) for the filling compound (FM).

2. Device according to Claim 1, characterized in that the diameter of the inlet opening of the prefilling chamber is selected to be 0.5 to 1 mm larger than the envelope of the conductors (AD1-ADn) combined to form a bundle (AB).

3. Device according to one of the preceding claims, characterized in that the coating nozzle (BD) is constructed to be interchangeable.

4. Device according to one of the preceding claims, characterized in that the inlet channel (EK) is constructed to be interchangeable.

5. Device according to one of the preceding claims, characterized in that a preferably interchangeable calibration nozzle (KD) is provided downstream of the main filling chamber (HK).

6. Device according to one of the preceding claims, characterized in that the prefilling chamber (VK) and the main chamber are connected via a bypass (BP) which is adjustable or permanently optimized for specific operating points.

7. Device according to one of the preceding claims, characterized in that the filling head (FK) is provided with a heating or cooling device (HCE).

8. Device according to Claim 7, characterized in that a filling head (FK) heater is provided for lowering the viscosity of the filling compound (FM).

9. Device according to Claim 7, characterized in that for the purpose of processing crosslinking filling compounds (FM) a filling head (FK) cooler is provided in such a way that the temperature of the filling compound (FM) is kept below the crosslinking temperature.

10. Device according to one of the preceding claims, characterized in that the prefilling chamber (VK) is constructed with two parts, the subchamber (VK1) on the input side having a smaller diameter than the downstream subchamber (VK2).

11. Device according to Claim 10, characterized in that the diameter of the downstream subchamber (VK2) is 3 to 8 times the diameter (DE) of the through-opening of the inlet channel (EK).

12. Device according to one of Claims 10 or 11, characterized in that the diameter of the subchamber (VK1) on the input side is 1.5 to 3 times the diameter (DE) of the through-opening (VK1) of the inlet channel (EK).

13. Device according to one of the preceding claims, characterized in that the diameter (DB) of the coating nozzle (BD) is between 1.5 and 4 times the diameter (DE) of the through-opening of the input channel (EK).

14. Device according to one of the preceding claims, characterized in that the diameter of the main filling chamber (HK) is 3 to 9 times the diameter (DE) of the through-opening of the inlet channel (EK).

15. Device according to one of the preceding claims, characterized in that the volume of the prefilling chamber (VK) is selected to be larger than the volume of the main filling chamber (HK).

16. Device according to one of the preceding claims, characterized in that a higher pressure is provided for the filling compound (FM) in the main chamber (HK).

## Revendications

1. Dispositif de remplissage de l'espace intermédiaire entre les brins et une gaine d'un câble optique et/ou électrique d'une substance (FM) de remplissage au moyen d'une tête (FK) de remplissage, qui comporte une chambre (VK) de préremplissage et une chambre (HK) de remplissage principal, une buse (BD) d'enduction, qui est de dimensions réduites en coupe transversale par rapport à la chambre (VK) de préremplissage, se raccordant à la chambre (VK) de préremplissage et débouchant dans la chambre (HK) de remplissage principal,
caractérisé en ce
qu'il est prévu un canal (EK) d'entrée commun pour plusieurs brins (AD1 à ADn) agencés en faisceau lâche, qui conduit à la chambre (VK) de préremplissage et dont le diamètre (DE) de l'ouverture de passage est choisi seulement très légèrement plus grand que la courbe enveloppe des brins (AD1 à ADn) qui sont rassemblés en un faisceau (AB),
en ce que la chambre (VK) de préremplissage et la chambre (HK) de remplissage principal communiquent entre elles par l'intermédiaire d'une dérivation (BP),
et en ce que la chambre (HK) de remplissage principal communique avec un réservoir (VB) de stockage de la substance (FM) de remplissage.

2. Dispositif suivant la revendication 1,
caractérisé en ce
que l'ouverture d'entrée de la chambre de préremplissage a un diamètre plus grand de 0,5 à 1mm que la courbe enveloppe des brins (AD1 à ADn) qui sont rassemblés en un faisceau (AB).

3. Dispositif suivant l'une des revendications précédentes, caractérisé en ce que la buse (BD) d'enduction est formée de manière à pouvoir être changée.

4. Dispositif suivant l'une des revendications précédentes, caractérisé en ce que le canal (EK) d'entrée est formé de manière à pouvoir être changé.

5. Dispositif suivant l'une des revendications précédentes, caractérisé en ce qu'il est prévu, après la chambre (HK) de remplissage principal, une buse (KD) de calibrage, qui peut, de préférence, être changée.

6. Dispositif suivant l'une des revendications précédentes, caractérisé en ce que la chambre (VK) de préremplissage et la chambre de remplissage principal communiquent par une dérivation (BP) réglable ou optimisée de manière fixe pour des points de fonctionnement déterminés.

7. Dispositif suivant l'une des revendications précédentes, caractérisé en ce que la tête (FK) de remplissage est munie d'un dispositif de chauffage ou de refroidissement.

8. Dispositif suivant la revendication 7, caractérisé en ce qu'il est prévu un chauffage de la tête (FK) de remplissage afin de diminuer la viscosité de la substance (FM) de remplissage.

9. Dispositif suivant la revendication 7, caractérisé en ce que, pour la substance (FM) de remplissage réticulée par le traitement, il est prévu un refroidissement de la tête (FK) de remplissage de manière que la température de la substance (FM) de remplissage soit maintenue inférieure à la température de réticulation.

10. Dispositif suivant l'une des revendications précédentes, caractérisé en ce que la chambre (VK) de préremplissage est en deux parties, la partie (VK1) de la chambre du côté de l'entrée ayant un diamètre plus petit que la partie de chambre (VK2) qui vient ensuite.

11. Dispositif suivant la revendication 10, caractérisé en ce que le diamètre de la partie (VK2) de chambre qui vient ensuite, représente de 3 à 8 fois le diamètre (DE) de l'ouverture de passage du canal (EK) d'entrée.

12. Dispositif suivant l'une des revendications 10 ou 11, caractérisé en ce que le diamètre de la partie (VK1) de chambre du côté de l'entrée représente de 1,5 à 3 fois le diamètre (DE) de l'ouverture de passage du canal (EK) d'entrée.

13. Dispositif suivant l'une des revendications précédentes, caractérisé en ce que le diamètre (DB) de la buse (BD) d'enduction représente de 1,5 à 4 fois le diamètre (DE) de l'ouverture de passage du canal (EK) d'entrée.

14. Dispositif suivant l'une des revendications précédentes, caractérisé en ce que le diamètre de la chambre (HK) de remplissage principal représente de 3 à 9 fois le diamètre (DE) de l'ouverture de passage du canal (EK) d'entrée.

15. Dispositif suivant l'une des revendications précédentes, caractérisé en ce que le volume de la chambre (VK) de préremplissage est choisi plus grand que le volume de la chambre (HK) principale.

16. Dispositif suivant l'une des revendications précédentes, caractérisé en ce qu'il est prévu une pression plus grande pour la substance (FM) de remplissage dans la chambre (HK) principale.
